# EUROPEAN PATENT APPLICATION

(11) **EP 4 589 915 A1**
(43) Date of publication of application: **23.07.2025**
(21) Application number: 23866887.5
(22) Date of filing: 11.04.2023
(51) Int. Cl.: H04L 45/60

(54) **DETERMINISTIC SERVICE PACKET FORWARDING METHOD, BORDER ROUTER, AND CONTROLLER**

(30) Priority: 20.09.2022 CN 202211148180
(71) Applicant: ZTE Corporation, Shenzhen, Guangdong 518057 (CN)
(72) Inventor: WU, Haisheng, Shenzhen, Guangdong 518057 (CN)
(74) Representative: Savi, Massimiliano
(86) International application number: PCT/CN2023/087657
(87) International publication number: WO 2024/060590

(57) **Abstract**

The present application discloses a deterministic service packet forwarding method, a border router, and a controller. The forwarding method applied to a border router comprises: obtaining a configuration packet, wherein the configuration packet carries a deterministic forwarding path and a period length value used for guiding the forwarding of a deterministic service packet, and the period length value represents a forwarding waiting duration of the deterministic service packet (S110); and forwarding a target service packet according to the deterministic forwarding path and the period length value (S120).

## Description

### CROSS-REFERENCE TO RELATED APPLICATION

This application is filed on the basis of the Chinese patent application No. 202211148180.9 filed September 20, 2022, and claims priority of the Chinese patent application, the entire contents of which are incorporated herein by reference.

### TECHNICAL FIELD

The present application relates to the field of data communication, in particular to a method for forwarding a deterministic service packet, a border router, and a controller.

### BACKGROUND

In a deterministic network, in order to achieve time synchronization between various traffic forwarding devices, Cyclic Queuing and Forwarding (CQF) is often employed to divide time into equal-length cycles so that data packets sent by upstream nodes in a certain cycle can be obtained by adjacent downstream nodes in the same cycle, thereby achieving time synchronization between various devices.

When CQF is employed for deterministic services, it is necessary to carry a cycle parameter, which is used for upstream and downstream for cycle mapping and to instruct the forwarding with deterministic delay in nodes. However, the relationship between deterministic flows and cycle parameter requires manual configuration for a traffic forwarding device by a user in advance, and the operations are very cumbersome, which affects the user experience.

### SUMMARY

Provided are a method for forwarding a deterministic service packet, a border router, and a controller in various embodiments of the present application.

According to a first aspect of the present application, a method for forwarding a deterministic service packet is provided. The method is applied to a border router. The method includes: acquiring a configuration packet that carries a deterministic forwarding path and a cycle length value for instructing forwarding of the deterministic service packet; where the cycle length value is indicative of a waiting time for forwarding the deterministic service packet; and forwarding a target service packet according to the deterministic forwarding path and the cycle length value.

According to a second aspect of the present application, a method for forwarding a deterministic service packet is provided. The method is applied to a controller. The method includes: generating a configuration packet, and sending the configuration packet to a border router; where the configuration packet carries a deterministic forwarding path and a cycle length value for instructing forwarding of the deterministic service packet, to instruct the border router to forward a target service packet according to the deterministic forwarding path and the cycle length value; where the cycle length value is indicative of a waiting time for the forwarding of the deterministic service packet.

According to a third aspect of the present application, a border router is provided. The border router includes a memory, a processor, and a computer program stored in the memory and executable on the processor which, when is executed by the processor, causes the processor to carry out any one of the first aspect of the methods described above.

According to a fourth aspect of the present application, a controller is provided. The controller includes a memory, a processor, and a computer program stored in the memory and executable on the processor which, when executed by the processor, causes the processor to carry out any one of the second aspect of the methods described above.

According to a fifth aspect of the present application, a computer-readable storage medium is provided. The computer-readable storage medium stores a computer-executable instruction which, when executed by a processor, causes the processor to carry out any one of the methods described above.

### BRIEF DESCRIPTION OF DRAWINGS

FIG. 1 depicts a flowchart showing a method for forwarding a deterministic service packet applied to a border router according to an embodiment of the present application;
FIG. 2 depicts a flowchart showing obtaining a configuration packet according to a forwarding request, according to another embodiment of the present application;
FIG. 3 depicts a flowchart showing receiving a configuration packet sent by a controller according to another embodiment of the present application;
FIG. 4 depicts a flowchart showing a method for forwarding a deterministic service packet in the case that the received target service packet is the deterministic service packet according to another embodiment of the present application;
FIG. 5 depicts a flowchart showing a method for forwarding a deterministic service packet applied to a controller according to another embodiment of the present application;
FIG. 6 depicts a schematic diagram showing an action item in BGP-Flowspec, according to another embodiment of the present application;
FIG. 7 depicts a schematic service flow diagram in a method for forwarding a deterministic service packet according to another embodiment of the present application;
FIG. 8 depicts a schematic diagram showing a method forwarding a deterministic service packet when deterministic traffic passes through a single autonomous domain, according to another embodiment of the present application;
FIG. 9 depicts a schematic diagram showing a method for forwarding a deterministic service packet when deterministic traffic passes through a plurality of autonomous domains according to another embodiment of the present application;
FIG. 10 depicts an example diagram showing a method for forwarding a deterministic service packet according to another embodiment of the present application; and
FIG. 11 depicts a schematic diagram of a controller according to another embodiment of the present application.

### DETAILED DESCRIPTION

The purpose, technical scheme and advantages of the present application will become apparent through the following description for various embodiments in conjunction with the drawings. It should be understood that the embodiments described here are intended for illustration but not limitation of the present application.

In some embodiments, although the system is shown with individual functional modules in the schematic diagram and the logical sequences are shown in the flow chart, in some cases, the system can have different modules than those shown and the operations can be executed in a different order than those shown. It should be noted that the terms "first" and "second", if used in the description, the claims and the drawings are intended to distinguish similar objects, and do not necessarily imply any specific order or sequence.

In a deterministic network, in order to achieve time synchronization between various traffic forwarding devices, Cyclic Queuing and Forwarding (CQF) is often employed to divide time into equal-length cycles so that data packets sent by upstream nodes in a certain cycle can be received by adjacent downstream nodes in the same cycle, thereby achieving time synchronization between various devices. When CQF is employed for deterministic services, it is necessary to carry a cycle parameter, which is used for upstream and downstream for cycle mapping and to instruct the forwarding with deterministic delay in nodes. However, the relationship between deterministic flows and cycle parameter requires manual configuration for a traffic forwarding device by a user in advance, and the operations are very cumbersome, which affects the user experience.

In view of the above situation, the embodiments of the present application provide a method for forwarding a deterministic service packet, a border router, and a controller. According to the method for forwarding a deterministic service packet set forth in the present application, the border router obtains a configuration packet. The configuration packet carries a deterministic forwarding path and a cycle length value for instructing the forwarding of deterministic service packet. The cycle length value is indicative of the waiting time for forwarding of the deterministic service packet. The border router forwards the target service packet according to the deterministic forwarding path and the cycle length value. The configuration packet is a gateway protocol flow rule configuration packet, which is converted into a control policy after being sent to the border router, such that the border router can forward the deterministic service packet on the deterministic forwarding path according to the cycle length value in the configuration packet. As such, the redirection of the deterministic service packet can be completed without manual configuration by users, which can effectively enhance network flexibility and maintainability, reduce manual adjustment errors and improve user experience.

Some embodiments of the present application will be illustrated with reference to the drawings.

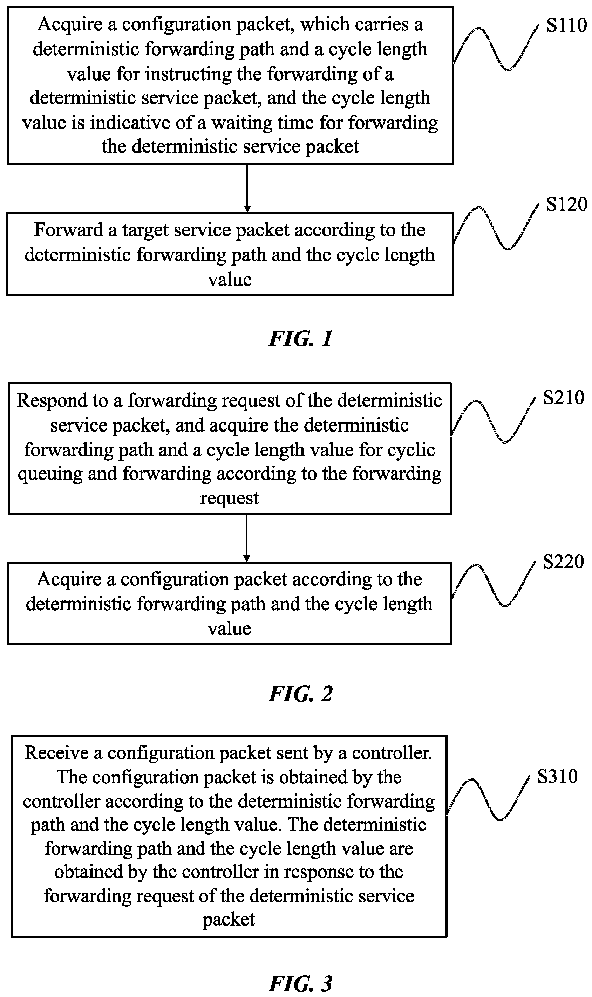

FIG. 1 depicts a flowchart showing a method for forwarding a deterministic service packet according to an embodiment of the present application. The method includes but is not limited to operations S110 and S120.

At operation S110, a configuration packet, which carries a deterministic forwarding path and a cycle length value for instructing the forwarding of a deterministic service packet is acquired, and the cycle length value is indicative of a waiting time for forwarding the deterministic service packet.

In some embodiments, a deterministic service packet is deterministic traffic in a deterministic network, where the term "deterministic" refers to higher deterministic requirements for network performance and network service quality of network services, such as delay within millisecond level and control of jitter within a smaller scale. Compared with the principle of "statistic multiplex and best efforts" in traditional networks, deterministic networks have stricter and finer-grained control and forwarding mechanisms to ensure the network service quality.

In some embodiments, deterministic network technologies include Layer 2 oriented time-sensitive networking (TSN) and Layer 3 oriented Deterministic Networking (DetNet), which require providing extremely low packet loss rate and determined end-to-end maximum transmission delay for specific real-time applications. DetNet architecture decomposes the data plane of DetNet into two sublayers: service sublayer and forwarding sublayer. The service sublayer is intended to provide protection and reordering of DetNet services, including DetNet control word (d-CW) and service identification label (S-label). The forwarding sublayer is intended to provide forwarding guarantees (low loss, guaranteed delay and limited reordering).

In some embodiments, the deterministic service packet is a deterministic service packet in a TSN network. According to the present application, the corresponding deterministic requirement is acquired according to the forwarding request corresponding to the deterministic service packet, and then a deterministic traffic forwarding path that meets the user's requirement is calculated according to the deterministic requirement in the subsequent operations. At the same time, the cycle (i.e., the cycle length value)required when using the Cyclic Queuing and Forwarding (CQF) mechanism is also calculated. The CQF is a traffic forwarding control mechanism in TSN. The use of the CQF can simply and efficiently realize the forwarding of deterministic traffic in TSN networks.

In some embodiments, the deterministic forwarding path is the path for cyclic queuing and forwarding of deterministic service packets. The cycle length value is the cycle for cyclic queuing and forwarding of deterministic traffic along the deterministic forwarding path.

In some embodiments, in the CQF mechanism, time is divided into equal-length cycles. Accurate time synchronization should be achieved between all devices that perform CQF. There are two queues for each egress port of each device. During a cycle, one queue is in transmission state and the other queue is in reception state. In the subsequent cycle, the states of the two queues are exchanged, and a cyclic queuing is realized, that is, packets received in a certain cycle T will be forwarded in the cycle (T+1). At the same time, CQF requires that a data packet sent by an upstream node at cycle T must be received by the neighboring downstream node in the same cycle (i.e., cycle T). Under the CQF mechanism, the upper and lower bounds of packet delay are: *Dmax=(n+1)*×*c,* and *Dmin =(n-1)* ×*c;* where *Dmax* and *Dmin* are the upper and lower bounds of delay respectively, n represents the number of hops, and c represents the cycle length.

In some embodiments, when CQF is employed in a deterministic service, it is necessary to carry a parameter of the cycle, which is used for cycle mapping of the upstream and downstream and to instruct the deterministic time delay forwarding in the node. The cycle can be stored within a packet, for example, the cycle can be stored in the MPLS label of the packet, and the cycle can also be stored in the HOH, DOH and option-tlv in an IPv6 header.

In some embodiments, a deterministic service packet passes through a single autonomous domain, which is a set of routers having the same routing policy and are managed and operated by the same technical management department. Each autonomous system can formulate its own routing policy, so it can be said that the entities within an autonomous system collaborate to provide a collection of internal gateway protocols for internal routing, that is, the cycle intended for CQF of deterministic traffic on deterministic forwarding paths in the same autonomous domain are the same, and deterministic forwarding path corresponds to a single cycle.

In some embodiments, a deterministic service packet passes through a plurality of autonomous domains, and the plurality of autonomous domains correspond to a plurality of cycles intended for CQF of deterministic traffic on the deterministic forwarding path, and the deterministic forwarding path corresponds to a plurality of cycles in this case.

In some embodiments, the border gateway protocol flow rule configuration packet is a packet using Border Gateway Protocol Flowspec (BGP-FS) protocol. The BGP Flowspec protocol packet is transmitted to a network device through the Flowspec route and then converted into a control policy, which ultimately affects the routing result in the network. Realizing the adjustment and optimization of traffic path can effectively improve the accuracy of network traffic optimization, enhance network flexibility and maintainability, reduce human adjustment errors, and improve the reliability of operators' safe and efficient operation and maintenance.

In some embodiments, BGP Flowspec defines a set of uniform traffic matching/action rule items, and RFC5575 defines the following data flow matching items, but it is not intended to limit to this in the present application.

Type 1-Destination Prefix: the destination address of a packet.

Type 2-Source Prefix: the source address of a packet.

Type 3-IP Protocol: protocol number, such as ICMP(1), TCP(6), or UDP(17).

Type 4-Port: TCP/UDP port numbers, such as http(80), ftp(21), https(443), etc., regardless of source port number and destination port number.

Type 5-Destination port: the destination port number of TCP/UDP.

Type 6-Source port: the source port number of TCP/UDP.

Type 7-ICMP type: ICMP type.

Type 8-ICMP code: ICMP code type.

Type 9-TCP flags: TCP flag bit.

Type 10-Packet length: The total length of an IP packet.

Type 11-DSCP: QOS type that can be matched with a packet.

Type 12-Fragment: fragment flag bit. For example: don't-fragment, first-fragment, is-fragment, last-fragment, not-a-fragment, etc.

In some embodiments, RFC5575 also defines, but is not limited to, the following basic processing action items for data streams.

Default action: receive data stream, and no processing under a policy.

Traffic-rate: speed limit, the limit rate value is 0, indicating that a data stream is to be discarded.

Traffic-action: the terminal action flag bit determines whether the data stream matches the next rule after it matches one rule. The Sample flag bit determines whether to sample or record the data stream.

Redirect: enable redirecting the data stream to other VRFs.

Traffic Marking: Set DSCP information for data flow.

At operation S120, a target service packet is forwarded according to the deterministic forwarding path and the cycle length value.

In some embodiments, the deterministic service packet passes through a single autonomous domain. The deterministic forwarding path corresponds to a single cycle length value. The border gateway protocol flow rule configuration packet includes a matching field, i.e., "match" and an action field, i.e., "action". The matching field of the border gateway protocol flow rule configuration packet includes the network layer reachability information (NLRI) of the deterministic service packet. The NLRI includes the source address and destination address of the deterministic service packet. The NLRI is intended for the border router to determine whether the received target service packet is a deterministic service packet according to the NLRI. The action field of the border gateway protocol flow rule configuration packet includes the cycle length value and the deterministic forwarding path.

In some embodiments, the deterministic service packet passes through a plurality of autonomous domains. The deterministic forwarding path corresponds to a plurality of cycle length values. The border gateway protocol flow rule configuration packet includes a matching field, i.e., "match" and an action field, i.e., "action". The matching field of the border gateway protocol flow rule configuration packet includes the NLRI of the deterministic service packet. The NLRI includes the source address and destination address of the deterministic service packet. The NLRI is intended for the border router to determine whether the received target service packet is a deterministic service packet according to the NLRI. The action field of the border gateway protocol flow rule configuration packet includes a plurality of cycle length values and the deterministic forwarding path.

In some embodiments, the deterministic forwarding path includes, but is not limited to, a segment routing policy (SR-policy) forwarding path, a source routing protocol (SR-TE) forwarding path, or a multi-protocol label switching traffic engineering (MPLS-TE) forwarding path.

In some embodiments, the border router is a border gateway protocol flow rule router corresponding to the deterministic forwarding path. When deterministic traffic reaches the border router, the router takes effect BGP-Flowspec policy according to the configuration packet. When the matched packet has deterministic requirements and needs to be forwarded to a special deterministic traffic path with CQF, the packet is forwarded by using the cycle contained in the configuration packet.

In some embodiments, the border router receives the configuration packet sent by the controller, obtains the deterministic forwarding path and cycle length value according to the configuration packet, and forwards the target service packet, such that the redirection of the deterministic target service packet can be completed without manual configuration by a user. During the deterministic forwarding, the BGP-Flowspec mechanism can automatically filter and set cycle values in traffic and map between different cycles without complicated manual configuration, which simplifies manual operation, effectively enhances network flexibility and maintainability, reduces manual adjustment errors and improves user experience.

FIG. 2 depicts a flowchart showing a method for forwarding a deterministic service packet according to another embodiment of the application, where the autonomous domain through which the deterministic forwarding path passes includes the first autonomous domain, and the cycle length value corresponding to the first autonomous domain is the first cycle length value. The method includes but is not limited to operations S210 and S220.

At operation S210, a forwarding request of the deterministic service packet is responded to, and the deterministic forwarding path and a cycle length value for cyclic queuing and forwarding are acquired according to the forwarding request.

At operation S220, a configuration packet is acquired according to the deterministic forwarding path and the cycle length value.

In some embodiments, after receiving the deterministic service packet in response to the forwarding request of the deterministic service packet, the border router obtains the deterministic forwarding path and the cycle length value for cyclic queuing and forwarding according to the service request information corresponding to the deterministic service packet carried in the forwarding request, and obtains the configuration packet according to the deterministic forwarding path and the cycle length value. The border router determines whether the received target service packet is a deterministic service packet according to the configuration packet. When it is determined that the received target service packet is a deterministic service packet, the border router takes the cycle length value in the configuration packet as the forwarding cycle to perform cyclic queuing and forwarding of the deterministic service packet on the deterministic forwarding path, thus completing the redirection of the deterministic service packet.

In some embodiments, the deterministic forwarding path passes through a first autonomous domain. The deterministic service packet passes through a single autonomous domain. The deterministic forwarding path corresponds to a single cycle length value. The border gateway protocol flow rule configuration packet includes a matching field, i.e., "match", and an action field, i.e., "action". The matching field of the border gateway protocol flow rule configuration packet includes NLRI of the deterministic service packet. The action field of the border gateway protocol flow rule configuration packet includes a cycle length value and a deterministic forwarding path. After sending the configuration packet to the border router, the border router determines whether the received target service packet is a deterministic service packet according to the NLRI contained in the matching field, "match". When it is determined that the received target service packet is a deterministic service packet, the action field, "action" is executed, and CQF is performed on the deterministic service packet in the first autonomous domain with the cycle length value as the forwarding cycle, thereby completing the redirection of the deterministic service packet.

FIG. 3 depicts a flowchart showing a method for forwarding a deterministic service packet according to another embodiment of the present application. The method includes but is not limited to operation S310.

At operation S310, a configuration packet sent by a controller is received. The configuration packet is obtained by the controller according to the deterministic forwarding path and the cycle length value. The deterministic forwarding path and the cycle length value are obtained by the controller in response to the forwarding request of the deterministic service packet.

In some embodiments, the border router receives the border gateway protocol flow rule configuration packet sent by the controller, obtains the deterministic forwarding path and the cycle length value for CQF according to the configuration packet, and forwards the target service packet according to the deterministic forwarding path and the cycle length value, and then completes the redirection of the deterministic service packet according to the cycle length value, which can effectively enhance the network flexibility and maintainability, reduce human adjustment errors and improve the user experience.

In some embodiments, obtaining the deterministic forwarding path and the cycle length value for CQF according to the forwarding request includes determining the deterministic forwarding path according to service request information corresponding to the deterministic service packet carried in the forwarding request, and obtaining at least one cycle length value corresponding to the deterministic forwarding path according to the CQF mechanism.

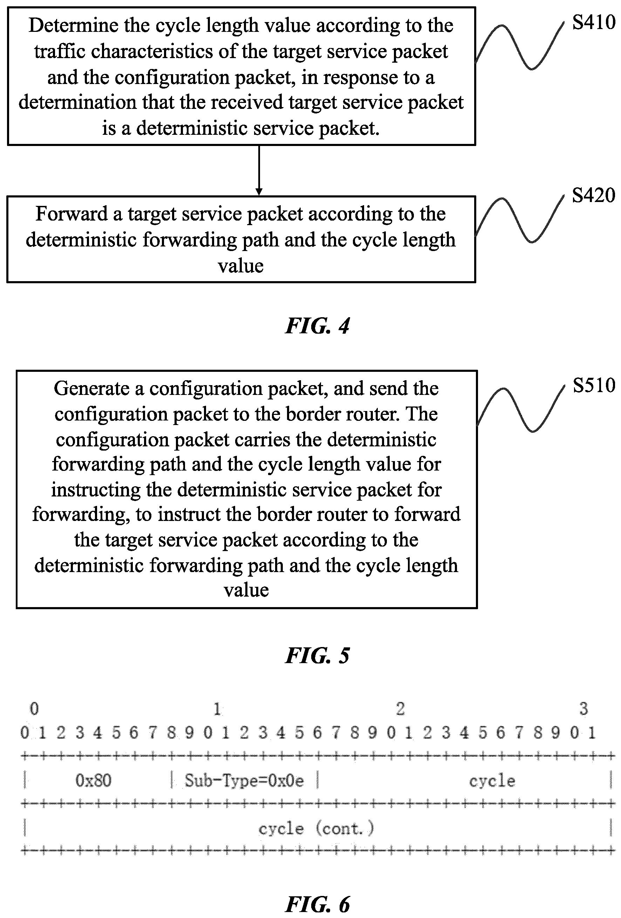

FIG. 4 depicts a flowchart showing a method for forwarding a deterministic service packet, according to another embodiment of the present application where the configuration packet carries NLRI of the deterministic service packet. The method includes but is not limited to operations S410, and S420.

At operation S410, the cycle length value is determined according to traffic characteristics of the target service packet and the configuration packet, in response to a determination that the received target service packet is a deterministic service packet.

At operation S420, the target service packet is forwarded according to the deterministic forwarding path and the cycle length value.

In some embodiments, the configuration packet carries the NLRI of the deterministic service packet. The NLRI includes but is not limited to the source address and destination address of the deterministic service packet. After sending the configuration packet to the border router, the border router can identify the received target service packet according to the NLRI, and determine the target service packet with consistent NLRI as the deterministic service packet, and then filter and set the cycle value for the deterministic service packet and map between different cycles in the subsequent operations for the deterministic service packet to complete the redirection of the deterministic service packet.

In some embodiments, the service packet received by the border router includes a plurality of deterministic service packets, and the corresponding deterministic forwarding path and cycle length value of each deterministic service packet are different, so when a plurality of deterministic service packets are determined from the received service packets, the corresponding cycle length value is determined from the configuration packet according to the traffic characteristics of the target service packet. Then, CQF is performed on the plurality of deterministic service packets with different cycle length values. As such, the border router can meet the forwarding requirements of deterministic service packets with different forwarding cycles at the same time, and the forwarding efficiency of deterministic service packets is improved. The traffic characteristics of a deterministic service packet include but are not limited to common parameters such as bandwidth, delay and transmission data size of thedeterministic service packet.

In some embodiments, the cycle length value of the configuration packet includes a matching cycle length value and a corresponding configuration cycle length value. The matching cycle length value is indicative of the waiting time for forwarding of a deterministic service packet in the first autonomous domain and the configuration cycle length value is indicative of the waiting time for forwarding of deterministic service packet in the second autonomous domain. The border router is the end node of the first autonomous domain and the head node of the second autonomous domain. The matching cycle length value corresponds to the cycle added in the matching field of BGP_FS packet, and the configuration cycle length value corresponds to the cycle in the action field of "set cycle" added in BGP_FS packet. The cycle length value of the configuration packet includes the matching cycle length value and the corresponding configuration cycle length value. Forwarding the target service packet according to the deterministic forwarding path and the cycle length value includes, comparing the cycle length value of the target service packet with the matching cycle length value, when the cycle length value of the target service packet is equal to the matching cycle length value, setting the cycle length value of the target service packet as the corresponding configuration cycle length value, and forwarding the target service packet according to the deterministic forwarding path and the configuration cycle length value.

In some embodiments, after the configuration packet is sent to the border router, the border router performs the corresponding action field, "action" on the service packet under the condition that the deterministic service packet matches the matching field "match", and modifies the cycle length value of the deterministic service packet to the cycle value specified in the action field, "action", such that the border router can instruct a local device to perform queuing and scheduling processing according to the cycle in the packet.

In some embodiments, the border router modifies the cycle length value of the deterministic service packet according to the configuration packet, and forwards the target service packet according to the deterministic forwarding path and the cycle length value.

In some embodiments, the deterministic forwarding path passes through a first autonomous domain and a second autonomous domain. The border router is located between the first autonomous domain and the second autonomous domain. The deterministic forwarding path corresponds to a plurality of cycle length values. The border gateway protocol flow rule configuration packet includes a matching field, "match" and an action field, "action". The matching field of the border gateway protocol flow rule configuration packet includes the NLRI of the deterministic service packet and the cycle length value corresponding to the first autonomous domain, and the action field of the border gateway protocol flow rule configuration packet includes the cycle length value corresponding to the second autonomous domain and the deterministic forwarding path. After sending the configuration packet to the border router, the border router determines whether the received target service packet is a deterministic service packet according to the NLRI contained in the matching field, and in response to a determination that the received target service packet is a deterministic service packet, further determines whether the cycle length value in the deterministic service packet is consistent with the cycle length value corresponding to the first autonomous domain, and if the cycle length value in the deterministic service packet is consistent with the cycle length value corresponding to the first autonomous domain, execute the action field, "action" to modify the cycle length value in the deterministic service packet to the cycle length value corresponding to the second autonomous domain, and performs CQF on the deterministic service packet in the second autonomous domain with the cycle length value corresponding to the second autonomous domain as the forwarding cycle, then during the deterministic forwarding, the cycle length value is automatically filtered and set in the traffic, and mapping are performed among different cycle length values through the BGP-Flowspec mechanism to complete the redirection of the deterministic service packet.

In some embodiments, the configuration packet carries the NLRI of the deterministic service packet, and before forwarding the target service packet according to the deterministic forwarding path and the cycle length value, the method further includes determining that the received target service packet is a deterministic service packet according to the NLRI.

FIG. 5 depicts a flowchart showing a method for forwarding a deterministic service packet according to another embodiment of the present application. The method is applied to a controller, and includes but is not limited to operation S510.

At operation S510, a configuration packet is generated, and the configuration packet is sent to the border router. The configuration packet carries the deterministic forwarding path and the cycle length value for instructing the deterministic service packet for forwarding, to instruct the border router to forward the target service packet according to the deterministic forwarding path and the cycle length value.

In some embodiments, the configuration packet is a border gateway protocol flow rule configuration packet. The cycle length value is indicative of the deterministic time delay in the border router. The controller sends the configuration packet to the border router. The configuration packet carries the deterministic forwarding path for the deterministic service packet and the cycle length value for CQF. The border router receives the border gateway protocol flow rule configuration packet sent by the controller, obtains the deterministic forwarding path and the cycle length value for CQF according to the configuration packet, and forwards the deterministic service packet according to the deterministic forwarding path and the cycle length value, and then completes the redirection of the deterministic service packet according to the cycle length value, which can effectively enhance the network flexibility and maintainability, reduce human adjustment errors and improve the user experience.

In some embodiments, generating a configuration packet includes responding to a forwarding request of a deterministic service packet, and obtaining a deterministic forwarding path and a cycle length value for CQF according to the forwarding request, and obtaining a configuration packet according to the deterministic forwarding path and the cycle length value.

In some embodiments, obtaining the deterministic forwarding path and the cycle length value for CQF according to the forwarding request includes determining the deterministic forwarding path according to the service request information corresponding to the deterministic service packet carried in the forwarding request, and obtaining at least one cycle length value corresponding to the deterministic forwarding path according to the CQF mechanism.

In some embodiments, sending the configuration packet to the border router to cause the border router to forward the deterministic service packet according to the deterministic forwarding path and the cycle length value includes: sending the configuration packet to the border router to cause the border router to determine the received target service packet as a deterministic service packet according to the configuration packet, determining the cycle length value according to the deterministic service packet and the configuration packet, and forwarding the deterministic service packet according to the deterministic forwarding path and the cycle length value.

In some embodiments, sending the configuration packet to the border router further includes: sending the configuration packet to the border router, to cause the border router to modify the cycle length value of the deterministic service packet according to the configuration packet, and forwarding the deterministic service packet according to the deterministic forwarding path and the cycle length value.

In some embodiments, the configuration packet carries the NLRI of the deterministic service packet. After the configuration packet is sent to the border router, the configuration packet is sent to the border router, such that the border router determines the received target service packet is the deterministic service packet according to the NLRI.

In some embodiments, the controller obtains the deterministic service packet, responds to the forwarding request of the deterministic service packet, obtains the deterministic forwarding path and at least one cycle length value for CQF according to the forwarding request, and obtains a configuration packet according to the deterministic forwarding path and the cycle length value. The configuration packet is a border gateway protocol flow rule configuration packet. The configuration packet is sent to the border router, to cause the border router to forward the deterministic service packet according to the deterministic forwarding path and the cycle length value. The border gateway protocol flow rule configuration packet will be converted into a control policy after being sent to the border router. As such, the border router completes the redirection of the deterministic service packet according to the cycle length value, which can effectively enhance the flexibility and maintainability of the network, reduce manual adjustment errors and improve the user experience.

FIG. 6 depicts a schematic diagram showing an action item in BGP-Flowspec according to another embodiment of the present application.

Referring to FIG. 6, in some embodiments, the configuration packet is acquired according to the deterministic forwarding path and the cycle length value, where the structures of the "match/matching" item and the "action" item in the BGP-Flowspec configuration packet are as follows.

The matching item in BGP-Flowspec is extended, and "type=13" is added to identify deterministic cycle information. The format of cycle information is: "Encoding: <type (1 octet), [op, value]+>"; where type=13; "op" refers to the definition in section 4 of RFC5575; "value" is indicative of the cycle value, such as 10 (and the unit is µs by default).

The action item in BGP-Flowspec is extended, and a sub-type=0x0e set cycle sub-object is added to the extended community attribute with type=0x80: this sub-object is used for actions after match, such as marking the deterministic flow packet with cycle value after matching deterministic flow. The cycle value here can be stored in an MPLS label or in an IPv6 header, and the present application is not limited thereto.

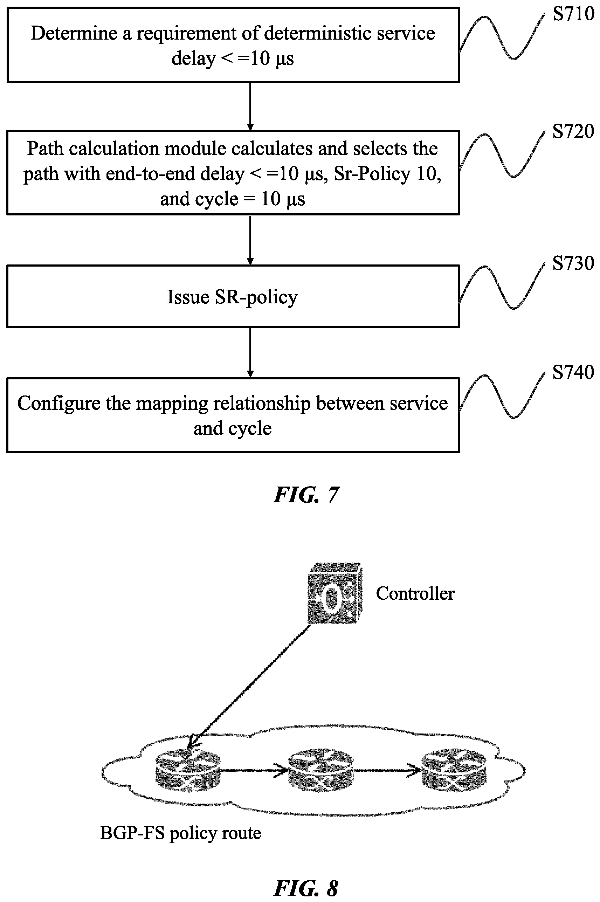

FIG. 7 depicts a flowchart showing a method for forwarding a deterministic service packet according to another embodiment of the present application. The method includes but is not limited to operations S710, S720, S730, and S740.

At operation S710, requirement of deterministic service delay < =10 µs is determined.

At operation S720, a path calculation module calculates and selects the path with end-to-end delay < =10 µs, SR-Policy 10, and cycle = 10 µs.

At operation S730, SR-policy is issued.

At operation S740, the mapping relationship between service and cycle is configured.

In some embodiments, the controller's deterministic service demand delay <=10 µs corresponds to obtaining the deterministic requirement of the deterministic service packet. The path calculation module in the controller performs calculations and selects a path with an end-to-end delay <=10 µs, such as sr-policy10, cycle =10 µs. That is, a deterministic forwarding path and at least one cycle length value for CQF are obtained according to the deterministic service packet. The controller then issues a SR-policy, configures the mapping relationship between the service and the cycle, and sends the configuration packet to the border router, such that the border router forwards the deterministic service packet according to the deterministic forwarding path and the cycle length value. After the deterministic packet matches the SR-policy, the SR related information is encapsulated, and then the cycle value is found from the mapping table, and encapsulated within the relevant position for subsequent forwarding, thereby completing the cycle mapping between nodes.

FIG. 8 depicts a schematic diagram showing a method for forwarding a deterministic service packet when deterministic traffic passes through a single autonomous domain according to another embodiment of the present application.

Referring to FIG. 8, in some embodiments, the BGP-FS policy route is deployed at the edge node of the deterministic domain. When a deterministic service flow comes in, the flow will be identified as a deterministic flow, and then the cycle value will be marked according to the actions of BGP-FS. The relevant operations are as follows.

The controller calculates, according to the requirements of the deterministic service, a path satisfying deterministic requirements, such as sr-policy-1 (i.e., the one corresponding to the forwarding path in FIG. 8), CQF is employed on this path, the required cycle value is of 10µs level.

According to the characteristics of deterministic service, the controller constructs match items that can identify deterministic service flows, such as source address and destination address, to form NLRI part of BGP-FS.

The controller constructs the action part of BGP-FS according to the calculated sr-policy-1 and the cycle value. The sr-policy-1 is encapsulated by redirecting to the SR-Policy action, refer to draft-jiang-idr-ts-flowspec-srv6-policy-04. The cycle value proposed in the present application is encapsulated by the action item of "set cycle". As shown in the following Table #(1):

**Table #(1)**

| type | extended community | encoding |
|---|---|---|
| 0x8008 | redirect | byte Route Target |
| 0x800e | traffic-marking | CYCLE value |

As shown in Table #(1), the controller sends the constructed BGP-FS routing entry to the border router and which is taken into effect. The deterministic traffic reaches the border router. According to the effective BGP-FS policy, the router determines by matching that the traffic is deterministic which needs to take a special sr-policy-1 path with CQF mechanism, and employs the cycle in SR-policy to forward the traffic.

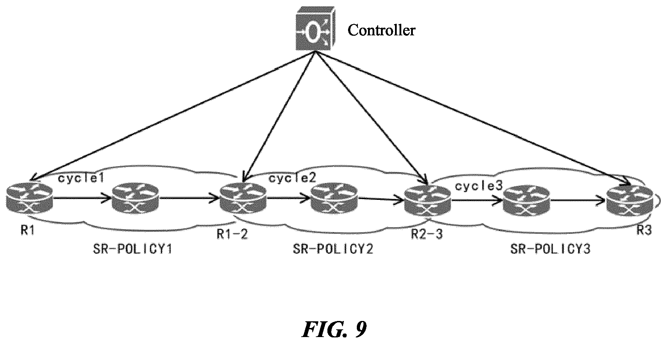

FIG. 9 depicts a schematic diagram showing a method for forwarding a deterministic service packet when deterministic traffic passes through a plurality of autonomous domains according to another embodiment of the present application.

Referring to FIG. 9, in some embodiments, taking deterministic traffic crossing multiple autonomous domains as an example, the cycles used in each autonomous domain are inconsistent, and mapping processing needs to be carried out through the "match cycle" item and the "set cycle". The relevant steps are as follows.

According to the requirements of deterministic services, the controller calculates a path that meets the deterministic requirements. In this scenario, the path is composed of three SR-policies. Each path adopts CQF, and the required cycle values are cycle1, cycle2 and cycle3 respectively.

The controller issues BGP-Flowspec policies to the border routers in the three domains respectively. As shown in the following Table #(2):

**Table #(2)**

| Serial Number | NLRI, match entry; | Action, action entry |
|---|---|---|
| 1 | Source address and destination address; | 1, redirect sr-policy-1; |
| | | 2, Set cycle = cycle1; |
| 2 | 1, Source address and destination address; | 1, redirect sr-policy-2; |
| | 2, Cycle 1 | 2, Set cycle = cycle2; |
| 3 | 1. Source address and destination address; | 1. redirect sr-policy-3; |
| | 2. Cycle 2 | 2. set cycle = cycle3; |

Deterministic traffic arrives at the border router R1. According to the effective BGP-Flowspec policy, the router determines that the traffic is deterministic, and needs to take a special sr-policy-1 path with CQF mechanism, and modifies the cycle field in the packet to "cycle1", and forwards the packet by using the cycle of "cycle1" in sr-policy-1.

After receiving the deterministic packet, the router R1-2 matches the deterministic flow characteristics, redirects to the sr-policy-2 path, modifies the cycle field in the packet to "cycle2", and forwards the packet by using the cycle of "cycle2"in sr-policy-2.

After receiving the deterministic packet, the router R1-2 matches the deterministic flow characteristics, redirects to the sr-policy-3 path, modifies the cycle field in the packet to "cycle3", and forwards the packet by using the cycle of "cycle3"in sr-policy-3.

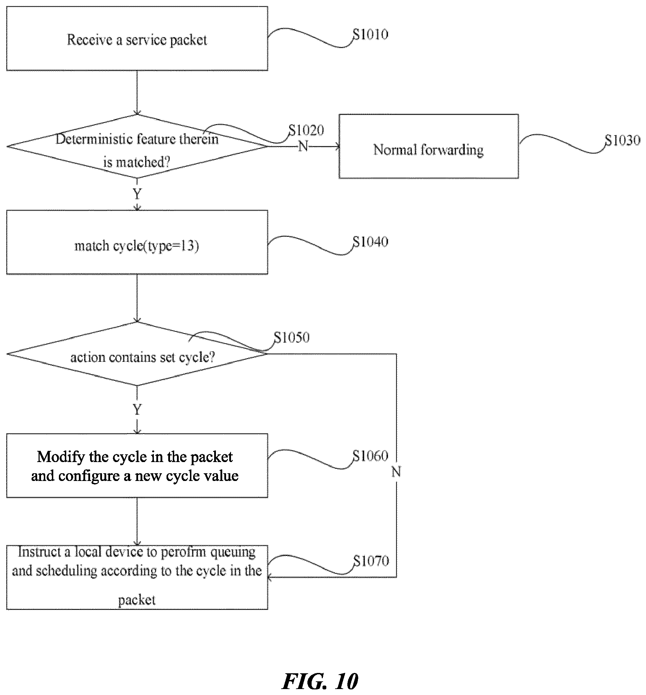

FIG. 10 depicts an example diagram showing a method for forwarding a deterministic service packet according to another embodiment of the application. The method includes but is not limited to operations S1010, S1020, S1030, S1040, S1050, S1060 and S1070.

At operation S 1010, a service packet is received.

At operation S1020, a deterministic feature within the service packet is matched with. If the service packet matches the deterministic feature in "match", the method proceeds to operation S1030, otherwise the method proceeds to operation S 1040.

At operation S 1030, match cycle (type = 13).

At operation S 1040, normal forwarding is performed.

At operation S1050, a determination as to whether the "set cycle" is included in the "action" is performed, if so, the method proceeds to operation S1060, if not, the method proceeds to operation S1070.

At operation S1060, the initial cycle in the packet is modified and set to a new cycle value.

At operation S1070, a local device is instructed to perform queuing and scheduling according to the cycle in the packet.

In some embodiments, a redirection device for deterministic service packets is provided. The redirection device is configured to perform the above operations S1010 to S1070. The controller calculates a path that meets the user's requirements according to the deterministic requirements of the packet, and also calculates the cycle value required when using the CQF mechanism. A BGP-Flowspec policy is formed according to the "match" item and the "action" item information. The "match" item is a deterministic flow feature, and the "action" is an action of redirecting to the path and an action of "set cycle". The packet corresponding to the BGP-Flowspec policy is sent to the redirection device, to cause the redirection device to map between different cycles. For example, when the deterministic traffic crosses multiple paths, the cycle values used in each path may be inconsistent and need to be mapped. This device directly performs the action of "set cycle" after matching the cycle value in the packet.

In some embodiments, referring to FIG. 6, multiple cycle values are supported for setting public paths. For example, the path of sr-policy1 can be set with cycle1, and it can also be set with cycle 2 ... cycle N, as long as the resources on the path of SR-Policy are sufficient.

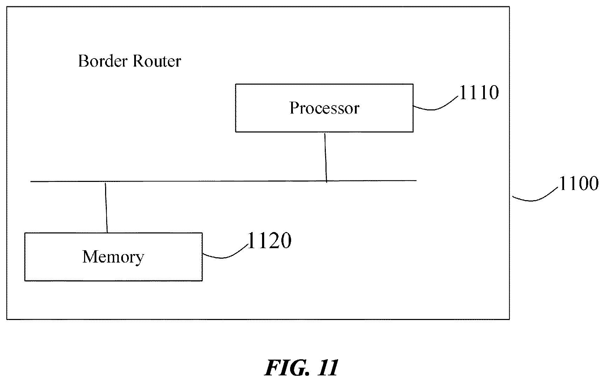

Referring to FIG. 11, according to an embodiment of the present application, a border router 1100 is provided. The border router includes a memory 1120, a processor 1110 and a computer program stored in the memory and executable by the processor which, when executed by the processor 1110, causes the processor 1110 to carry out the method applied to the border router as described in any one of the embodiments above, for example, the above operations S110 to S120 described in conjunction with FIG. 1, S210 to S220 described in conjunction with FIG. 2, S310 described in conjunction with FIG. 3, S410 to S420 described in conjunction with FIG. 4, S510 described in conjunction with FIG. 5, S710 to S740 described in conjunction with FIG. 7, or S1010 to S1070 described in conjunction with FIG. 10.

According to an embodiment of the present application, a computer-readable storage medium is provided. The computer-readable storage medium stores computer-executable instructions which, when executed by one or more controlling processors, causes the processors to carry out the operations of the method described in any one of the embodiments above, for example, the above operations S110 to S120 described in conjunction with FIG. 1, S210 to S220 described in conjunction with FIG. 2, S310 described in conjunction with FIG. 3, S410 to S420 described in conjunction with FIG. 4, S510 described in conjunction with FIG. 5, S710 to S740 described in conjunction with FIG. 7, or S1010 to S1070 described in conjunction with FIG. 10.

The embodiments of the present application provide a method for forwarding a deterministic service packet, a border router and a controller. According to the method, a configuration packet is obtained. The configuration packet is a border gateway protocol flow rule configuration packet, and carries a deterministic forwarding path of the deterministic service packet and a cycle length value for CQF. The cycle length value is indicative of the deterministic time delay in the border router. The deterministic service packet is forwarded according to the deterministic forwarding path and the cycle length value. The border gateway protocol flow rule configuration packet is converted into a control policy after being sent to the border router, such that the border router can forward the deterministic service packet on the deterministic forwarding path according to the cycle length value in the configuration packet. The redirection of the deterministic service packet can be completed without manual configuration by users, which can effectively enhance network flexibility and maintainability, reduce manual adjustment errors and improve user experience.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

## Claims

1. A method for forwarding a deterministic service packet, which is applied to a border router, the method comprising:
acquiring a configuration packet that carries a deterministic forwarding path and a cycle length value for instructing forwarding of the deterministic service packet; wherein the cycle length value is indicative of a waiting time for forwarding the deterministic service packet; and
forwarding a target service packet according to the deterministic forwarding path and the cycle length value.

2. The method according to claim 1, wherein, acquiring the configuration packet comprises:
responding to a forwarding request for the deterministic service packet, and acquiring the deterministic forwarding path, and a cycle length value for Cyclic Queuing and Forwarding, CQF, according to the forwarding request; and
acquiring a configuration packet according to the deterministic forwarding path and the cycle length value.

3. The method according to claim 1, wherein, acquiring the configuration packet comprises:
receiving the configuration packet sent by a controller; wherein, the configuration packet is acquired by the controller according to the deterministic forwarding path and the cycle length value; and the deterministic forwarding path and the cycle length value are acquired by the controller in responding to the forwarding request for the deterministic service packet.

4. The method according to claim 2, wherein, acquiring the deterministic forwarding path and the cycle length value according to the forwarding request comprises:
determining the deterministic forwarding path according to service request information corresponding to the deterministic service packet carried in the forwarding request; and
acquiring the cycle length value corresponding to the deterministic forwarding path according to a CQF mechanism.

5. The method according to claim 1, wherein, forwarding the target service packet according to the deterministic forwarding path and the cycle length value comprises:
determining the cycle length value according to both a traffic characteristic of the target service packet, and the configuration packet, in response to a determination that a received target service packet is the deterministic service packet; and
forwarding the target service packet according to the deterministic forwarding path and the cycle length value.

6. The method according to claim 1, wherein, the cycle length value of the configuration packet comprises a matching cycle length value and a configuration cycle length value, the matching cycle length value is indicative of the waiting time for forwarding the deterministic service packet in a first autonomous domain, the configuration cycle length value is indicative of the waiting time for forwarding the deterministic service packet in a second autonomous domain, the border router is an end node of the first autonomous domain, and is also a head node of the second autonomous domain; and forwarding the target service packet according to the deterministic forwarding path and the cycle length value comprises:
comparing a current cycle length value of the target service packet with the matching cycle length value; and
replacing the current cycle length value of the target service packet with the configuration cycle length value, in response to a determination that the current cycle length value of the target service packet is equal to the matching cycle length value, and forwarding the target service packet.

7. The method according to claim 1, wherein, the configuration packet carries network layer reachability information, NLRI, of the deterministic service packet, and before forwarding the target service packet according to the deterministic forwarding path and the cycle length value, the method further comprises:
determining the received target service packet to be the deterministic service packet according to the NLRI.

8. A method for forwarding a deterministic service packet, which is applied to a controller, the method comprising:
generating a configuration packet, and sending the configuration packet to aborder router; wherein, the configuration packet carries a deterministic forwarding path and a cycle length value for instructing forwarding of the deterministic service packet , to instruct the border router to forward a target service packet according to the deterministic forwarding path and the cycle length value;
wherein the cycle length value is indicative of a waiting time for forwarding the deterministic service packet.

9. The method according to claim 8, wherein, generating the configuration packet comprises:
responding to a forwarding request for the deterministic service packet, and acquiring the deterministic forwarding path and a cycle length value for Cyclic Queuing and Forwarding, CQF, according to the forwarding request; and
acquiring the configuration packet according to the deterministic forwarding path and the cycle length value.

10. The method according to claim 9, wherein, acquiring the deterministic forwarding path and the cycle length value for CQF according to the forwarding request comprises:
determining the deterministic forwarding path according to service request information corresponding to the deterministic service packet carried in the forwarding request; and
acquiring the cycle length value corresponding to the deterministic forwarding path according to a CQF mechanism.

11. A border router, comprising a memory, a processor and a computer program stored in the memory and executable by the processor which, when executed by the processor causes the processor to carry out the method as claimed in any one of claims 1 to 7.

12. A controller, comprising a memory, a processor and a computer program stored in the memory and executable by the processor which, when executed by the processor causes the processor to carry out the method as claimed in any one of claims 8 to 10.

13. A computer-readable storage medium storing a computer-executable instruction which, when executed by a processor, causes the processor to carry out the method as claimed in any one of claims 1 to 7, or the method as claimed in any one of claims 8 to 10.
